(19) Europäisches Patentamt / European Patent Office / Office européen des brevets

(11) **EP 4 133 605 B1**

(12) **EUROPEAN PATENT SPECIFICATION**

(45) Date of publication and mention
of the grant of the patent:
**20.05.2026 Bulletin 2026/21**

(21) Application number: **20733394.9**

(22) Date of filing: **15.06.2020**

(51) International Patent Classification (IPC):
**H04B 1/525** (2015.01)

(52) Cooperative Patent Classification (CPC):
**H04B 1/525**

(86) International application number:
**PCT/EP2020/066423**

(87) International publication number:
**WO 2021/254587 (23.12.2021 Gazette 2021/51)**

(54) **DEVICE AND METHOD FOR CANCELLING INTERFERENCE**

VORRICHTUNG UND VERFAHREN ZUR INTERFERENZUNTERDRÜCKUNG

DISPOSITIF ET PROCÉDÉ DE SUPPRESSION DES INTERFÉRENCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.02.2023 Bulletin 2023/07**

(73) Proprietor: **Huawei Technologies Co., Ltd.
Shenzhen, Guangdong 518129 (CN)**

(72) Inventors:
• **REGEV, Dror
80992 Munich (DE)**
• **EZRI, Doron
80992 Munich (DE)**
• **TSODIK, Genadiy
80992 Munich (DE)**

• **SHILO, Shimon
80992 Munich (DE)**

(74) Representative: **Roth, Sebastian
Mitscherlich PartmbB
Karlstraße 7
80333 München (DE)**

(56) References cited:
**WO-A1-2020/035140     US-B1- 9 894 612**

• **GINZBERG NIMROD ET AL: "A Full-Duplex
Quadrature Balanced RF Front End With Digital
Pre-PA Self-Interference Cancellation", IEEE
TRANSACTIONS ON MICROWAVE THEORY AND
TECHNIQUES, PLENUM, USA, vol. 67, no. 12, 1
December 2019 (2019-12-01), pages 5257 - 5267,
XP011763506, ISSN: 0018-9480, [retrieved on
20191231], DOI: 10.1109/TMTT.2019.2944814**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present disclosure relates to a Radio Frequency (RF) front end for wireless communications, in particular for use in a Half Duplex (HD), Full Duplex (FD) and/or Frequency Division Duplex (FDD) mode with multiple antenna chains. Accordingly, the disclosure provides a device and a method for cancelling interference of multiple Quadrature Balanced Power Amplifiers (QBPAs).

BACKGROUND

A main challenge that single chain FD radios face is the tremendous amount of self-interference. For simultaneous transmit receive (STR) antenna wireless communication scenarios, such as FD or FDD without a Diplexer, a minimum transmit and receive (Tx/Rx) isolation of 50-60 dB is required. Hence, a Transmit-Receive Self Interference Cancellation (SIC) mechanism is needed for STR wireless systems.

Notably, there are multiple Tx and Rx chains in multi-input multi-output (MIMO) radios. MIMO FD operations are challenged not only by the self-interference from each Tx to its own Rx in the same chain, but also by the crosstalk self-interference between the antennas. Thus, there are additional leaks between Tx/SIC inputs of each chain, and each other chain needs to be considered for SIC. That is, MIMO operation increases the SIC requirements.

WO 2020/035140 A1 discloses a RF front end based on a Quadrature Balanced Power Amplifier. US 9 894 612 discloses a remote unit that is configured to measure a power of the leaked intermodulation products and enables a selected number of power amplifiers in the power amplifier circuit for reducing the measured power of the leaked intermodulation products to a predetermined threshold.

SUMMARY

In view of the above-mentioned challenges, embodiments of the present disclosure aim to provide a SIC mechanism for MIMO radios. An objective is in particular to extend a QBPA-based RF front end approach of a single chain to multiple chains. The proposed multi-mode RF front end should be easy to integrate, e.g. on a chip and/or printed circuit board, and should have a low SIC signal to noise degradation.

The objective is achieved by the embodiments provided in the enclosed independent claims. Advantageous implementation forms of the embodiments are further defined in the dependent claims.

A first aspect of the disclosure provides a device for cancelling interference of multiple QBPAs according to claim 1.

The cancellation input signals of each QBPA in the multiple chains may thus be generated by the device in a "pre-PA" manner. In particular, each cancellation input signal may be output to a respective QBPA, thus, the respective QBPA amplifies the SIC signal(s) together with the Tx signal(s). The cancellation signal may be reconstructed at the third port of the respective QBPA, and can thus cancel leakage signals caused at the third port when operating the multiple QBPAs in transmit mode (leakage of the same chain and cross-leakages between chains).

For example, the leakage signal is caused by a respective signal at the third port of the respective QBPA, and is represented as the respective signal multiplied by a transfer function.

That is, a leakage signal at a receive port caused by an input signal *a* can be represent as *ha*, *h* being the transfer function from the input port of *a* to the receive port. The input port and the receive port may belong to different chains. Notably, to cancel all leakage signals at a receive port (i.e., the third port of a respective QBPA), interferences from each Tx to its own Rx in the same chain, and all the crosstalk self-interference between the different chains, should be considered.

In an example of two chains, the leakage signal at the first receive antenna (i.e., the third port of the first QBPA) may be given by $h_1^{Tx} a_{TX} + h_1^{SIC} a_{SIC} + h_{2 \to 1}^{Tx} b_{TX} + h_{2 \to 1}^{SIC} b_{SIC}$. Accordingly, the leakage signal at the second receive antenna (i.e., the third port of the second QBPA) may be given by $h_2^{Tx} b_{TX} + h_2^{SIC} b_{SIC} + h_{1 \to 2}^{Tx} a_{TX} + h_{1 \to 2}^{SIC} a_{SIC}$. Notably, to mitigate interferences, particular SIC signals $a_{SIC}$ and $b_{SIC}$ that make the both leakage signals to be zero are desired.

An implementation form of the first aspect is defined in claim 2.

As above discussed, SIC signals $a_{SIC}$ and $b_{SIC}$ that make the both leakage signals to be zero are desired. In particular, it is desired that

$$\begin{bmatrix} h_1^{Tx} & h_{2 \to 1}^{Tx} \\ h_{1 \to 2}^{Tx} & h_2^{Tx} \end{bmatrix} \begin{bmatrix} a_{TX} \\ b_{TX} \end{bmatrix} + \begin{bmatrix} h_1^{SIC} & h_{2 \to 1}^{SIC} \\ h_{1 \to 2}^{SIC} & h_2^{SIC} \end{bmatrix} \begin{bmatrix} a_{SIC} \\ b_{SIC} \end{bmatrix} = \begin{bmatrix} 0 \\ 0 \end{bmatrix}.$$

SIC signals can be calculated accordingly.

A further implementation form of the first aspect is defined in claim 3.

Optionally, the solution presented in the previous implementation can be extended for QBPA that includes nonlinear components. In this case, it may be assumed that the power of SIC signals is significantly lower than the power of Tx signals. That is, it may be considered that only Tx input signals include nonlinear components.

A further implementation form of the first aspect is defined in claim 4.

Optionally, in a more general case, both Tx and SIC signals may have nonlinear components. It is thus desired that $f(a_{TX}, b_{TX}) + g(a_{SIC}, b_{SIC}) = 0$.

A further implementation form of the first aspect is defined in claim 5.

The previous implementation forms for two chains of QBPAs can be extended for a larger number of chains, for example, in the case of three chains. Notably, for one or more QBPAs that include nonlinear components, the matrix for calculating the SIC signals can also be adapted accordingly.

A further implementation form of the first aspect is defined in claim 6.

In the more general case, SIC signals for multiple chains comprising m QBPAs can be calculated in a similar way as discussed in the previous implementations. Notably, this solution can also be extended for the multiple chains comprising nonlinear components, either for the case that the nonlinear components are only considered for Tx signals, or for the case that both Tx and SIC signals have nonlinear components.

The device may be further configured to operate in a half-duplex mode and/or a full-duplex mode, wherein the half duplex mode comprises a transmit mode and a receive mode.

Notably, the device can be used in a HD mode and/or a FD mode. In HD mode, when the device operates in Tx mode, there is no signal exists in the second ports and the third ports of the multiple QBPAs; when the device operates in Rx mode, the first ports and the fourth ports of the multiple QBPAs may be switched off, that is, the Tx and SIC signals are zero in this case.

A further implementation form of the first aspect is defined in claim 7.

Optionally, the transfer functions may be estimated using training sequences.

A further implementation form of the first aspect is defined in claim 8.

Optionally, the training sequences may be simultaneously transmitted into the first ports and the fourth ports of the QBPAs.

A further implementation form of the first aspect is defined in claim 9.

Optionally, the training sequences may be sequentially transmitted into the first ports and the fourth ports, such as in time-division multiple access (TDMA). That is, the training sequences may be divided into different time slots.

A further implementation form of the first aspect is defined in claim 10.

Optionally, the training sequences may be simultaneously transmitted into the first ports and the fourth ports, in an interleaved manner. In particular, the interleaving is done in frequency domain.

For example, the one or more training sequences are high throughput long training field, LTF, sequences, very high throughput LTF sequences, high efficiency LTF sequences, or extreme high throughput LTF sequences.

A second aspect of the disclosure provides a method for cancelling interference of multiple QBPAs according to claim 11.

The method of the second aspect may be developed in implementation forms according to the implementation forms described above for the first aspect. With the method of the second aspect and its implementation forms, the advantages and effects of the device of the first aspect and its respective implementation forms are thus achieved.

A third aspect of the disclosure provides a computer program product according to claim 12.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present disclosure will be explained in the following description of specific embodiments in relation to the enclosed drawings, in which

FIG. 1     shows a QBPA according to an embodiment of the disclosure.

FIG. 2    shows a device according to an embodiment of the disclosure.

FIG. 3    shows a device according to an embodiment of the disclosure.

FIG. 4    shows a method according to an embodiment of the disclosure.

DETAILED DESCRIPTION OF EMBODIMENTS

Illustrative embodiments of a device and corresponding methods for cancelling interference of multiple QBPAs are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

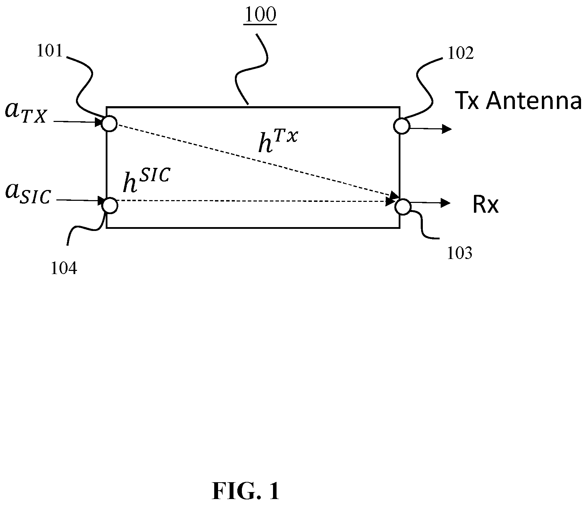

An example of a QBPA-based architecture for a single chain FD, particularly a QBPA 100, is shown in FIG. 1. The exemplary QBPA 100 includes four ports, namely a first port 101, a second port 102, a third port 103, and a fourth port 104. The QBPA 100 may receive a transmit input signal (i.e., $a_{TX}$) at the first port 101 and a cancellation input signal (i.e., $a_{SIC}$) at the fourth port 104. The second port 102 may be connected to an antenna, e.g., to provide a transmit signal to the antenna and to receive a receive signal from the antenna. The QBPA 100 may also provide a receive output signal (i.e., Rx) from the third port 103.

In particular, the signal $a_{TX}$ represents the signal to be transmitted, and the signal $a_{SIC}$ represents the synthetic signal injected in order to cancel the self-interference experienced at the receive antenna input. $h^{Tx}$ and $h^{SIC}$ represent the transfer functions from both input signals to the receive antenna. An aim of this disclosure is to minimize the self-interference experienced at the receive antenna. The total received signal at the receive antenna (interferences/leakage signals) can be represented as $h^{Tx}a_{TX} + h^{SIC}a_{SIC}$.

Notably, to mitigate interferences, a particular $a_{SIC}$ that makes the leakage signals to be zero are desired. Thus, to set the leakage signals being equal to zero, the required SIC signal to be injected can be computed (with a known $a_{TX}$ and the transfer functions) per tone (in frequency-domain), particularly as $a_{SIC} = -\frac{h^{Tx}a_{TX}}{h^{SIC}}$. Based on this implementation, surpassing 55dB of isolation for a single chain scenario can be achieved as shown on-chip in the lab.

As previously discussed, for MIMO operations there are multiple Tx/Rx chains. Additional leakages between Tx/SIC inputs of the same chain and each other chain need to be accounted for.

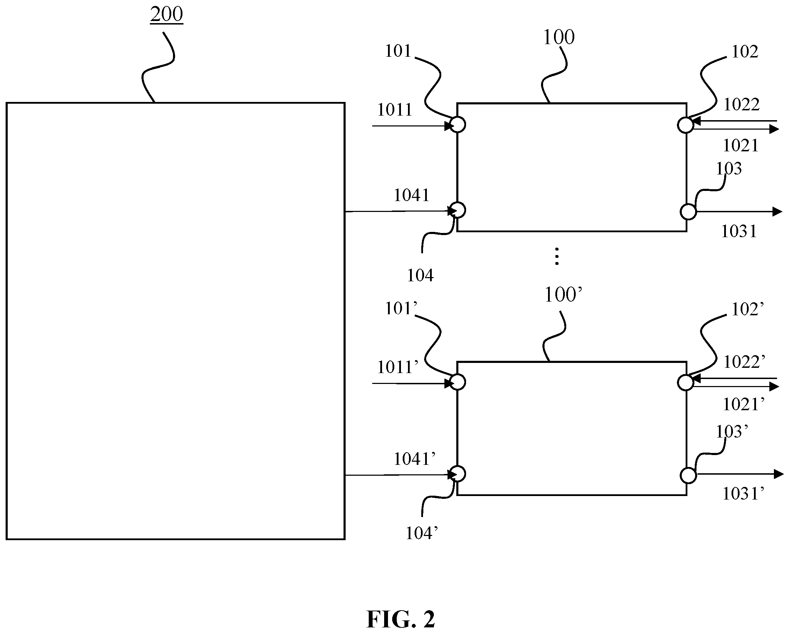

FIG. 2 shows a device 200 according to an embodiment of the disclosure. In particular, the device 200 is adapted for cancelling interference of multiple QBPAs 100, 100'. Notably, although there are only two QBPAs depicted in FIG. 2, the number of the QBPAs in the multiple chains is not limited. Each QBPA 100/100' may be a QBPA as shown in FIG. 1. Accordingly, same elements are provided with the same reference signs. The QBPA 100/100' comprises a first port 101/101' for receiving a transmit input signal 1011/1011', a second port 102/102' for transmitting a transmit signal 1021/1021' and receiving a receive signal 1022/1022', a third port 103/103' for providing a receive output signal 1031/1031', and a fourth port 104/104' for receiving a cancellation input signal 1041/1041'.

The device 200 is configured to determine a cancellation input signal 1041/1041' for each respective QBPA 100/100'. In particular, the cancellation input signal 1041/1041' cancels a leakage signal at the third port 103/103' of the respective QBPA 100/100'. The leakage signal is caused by the transmit input signal 1011/1011' of the respective QBPA 100/100', one or more transmit input signals 1011' of one or more other QBPAs 100' of the multiple QBPAs 100, 100', and one or more cancellation input signals 1041' of one or more other QBPAs 100' of the multiple QBPAs 100, 100'. Further, the device 200 is configured to provide the determined cancellation input signal 1041/1041' to the fourth port 104/104' of the respective QBPA 100/100'.

In order to extend the QBPA approach of single chain to multiple chains, the cross-leakages between chains should be considered and cancelled using the SIC inputs from all QBPAs.

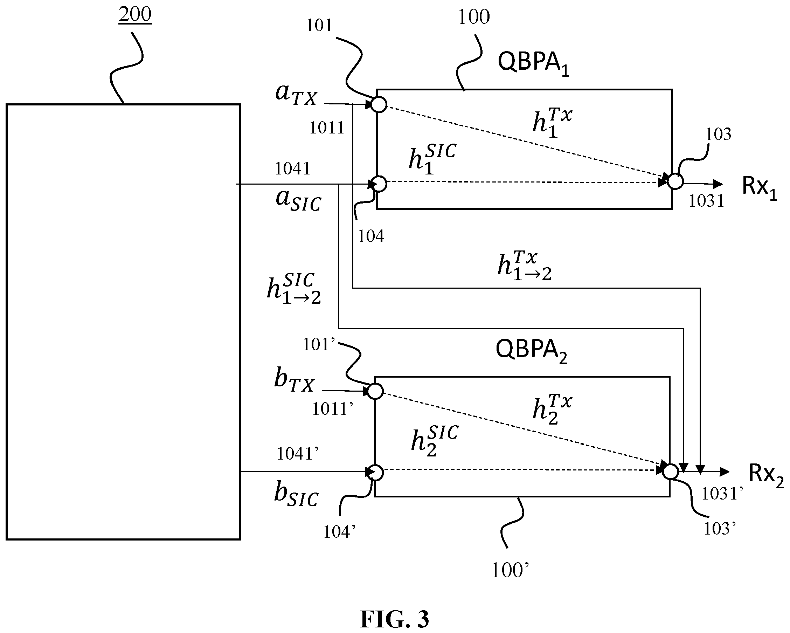

FIG. 3 shows an example of a device 200 for cancelling interference of two chains of QBPAs according to an embodiment of the disclosure. In particular, the first QBPA may be the QBPA 100 as shown in FIG. 1 or FIG. 2, and the second QBPA may be the QBPA 100 as shown in FIG. 1 or the QBPA 100' as shown in FIG. 2.

$a_{TX}$ and $b_{TX}$ represent the signals to be transmitted, i.e., the transmit input signal 1011 of the first QBPA 100, and the transmit input signal 1011' of the second QBPA 100'. $a_{SIC}$ and $b_{SIC}$ represent the synthetic injected SIC signals, i.e., the cancellation input signal 1041 of the first QBPA 100, and the cancellation input signal 1041' of the second QBPA 100'. Notably, the aim of the SIC signals is to cancel the interferences experienced at all receive antennas.

The leakage signal at the third port 103 of the first QBPA 100 may be given by $h_1^{Tx}a_{TX} + h_1^{SIC}a_{SIC} + h_{2\to1}^{Tx}b_{TX} + h_{2\to1}^{SIC}b_{SIC}$. The leakage signal at the third port 103' of the second QBPA 100' may be given by $h_2^{Tx} b_{TX} + h_2^{SIC} b_{SIC} + h_{1\to2}^{Tx} a_{TX} + h_{1\to2}^{SIC} a_{SIC}$. $h_1^{Tx}$ is a transfer function from the first port 101 of the first QBPA 100 to the third port 103 of the first QBPA 100, and $h_1^{SIC}$ is a transfer function from the fourth port 104 of the first QBPA 100 to the third port 103 of the first QBPA 100. $h_2^{Tx}$ is a transfer function from the first port 101' of the second QBPA 100' to the third port 103 of the second QBPA 100', and $h_2^{SIC}$ is a transfer function from the fourth port 104' of the second QBPA 100' to the third port 103' of the second QBPA 100'. $h_{2\to1}^{Tx}$ is a transfer function from the first port 101' of the second QBPA 100' to the third port 103 of the first QBPA 100, and $h_{2\to1}^{SIC}$ is a transfer function from the fourth port 104' of the second QBPA 100' to the third port 103 of the first QBPA 100. $h_{1\to2}^{Tx}$ is a transfer function from the first port 101 of the first QBPA 100 to the third port 103' of the second QBPA 100', and $h_{1\to2}^{SIC}$ is a transfer function from the fourth port 104 of the first QBPA 100 to the third port 103' of the second QBPA 100'.

According to embodiments of the disclosure, it is desired that both of the inputs to be zero, so a matrix form can be derived as follows:

$$\begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix} + \begin{bmatrix} h_1^{SIC} & h_{2\to1}^{SIC} \\ h_{1\to2}^{SIC} & h_2^{SIC} \end{bmatrix} \begin{bmatrix} a_{SIC} \\ b_{SIC} \end{bmatrix} = \begin{bmatrix} 0 \\ 0 \end{bmatrix}.$$

Accordingly, the values of $a_{SIC}$ and $b_{SIC}$ can be found via a formula:

$$\begin{bmatrix} a_{SIC} \\ b_{SIC} \end{bmatrix} = -\begin{bmatrix} h_1^{SIC} & h_{2\to1}^{SIC} \\ h_{1\to2}^{SIC} & h_2^{SIC} \end{bmatrix}^{-1} \begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix}.$$

Optionally, $a_{TX}$ and $b_{TX}$ are known to the device 200, as well as the transfer functions.

The solutions presented in the embodiment can be extended for the multiple chains with nonlinear components. For example, in a case that SIC signals have a power that is significantly lower than Tx signals, the matrix form may be adapted as:

$$\begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix} + \Sigma \begin{bmatrix} h_{1n}^{Tx} & h_{2\to1n}^{Tx} \\ h_{1\to2n}^{Tx} & h_{2n}^{Tx} \end{bmatrix} \begin{bmatrix} |a_{TX}|^{n-1} a_{TX} \\ |b_{TX}|^{n-1} b_{TX} \end{bmatrix} + \begin{bmatrix} h_1^{SIC} & h_{2\to1}^{SIC} \\ h_{1\to2}^{SIC} & h_2^{SIC} \end{bmatrix} \begin{bmatrix} a_{SIC} \\ b_{SIC} \end{bmatrix} = \begin{bmatrix} 0 \\ 0 \end{bmatrix}.$$

Herein n corresponds to a nonlinear component power order. That is, it is assumed that SIC signals have no nonlinear components; only Tx input signals have nonlinear components. Notably, in this embodiment, at least one Tx input signal of the multiple QBPAs comprises a nonlinear component.

According to an embodiment of the disclosure, $a_{TX}$ and $b_{TX}$ may be known to the device 200, wherein the transmit input signal 1011/1011' of at least one of the first QBPA 100 and the second QBPA 100' may comprise nonlinear components. The SIC signals to be injected may be computed as:

$$\begin{bmatrix} a_{SIC} \\ b_{SIC} \end{bmatrix} = -\begin{bmatrix} h_1^{SIC} & h_{2\to1}^{SIC} \\ h_{1\to2}^{SIC} & h_2^{SIC} \end{bmatrix}^{-1} \left( \begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix} + \Sigma \begin{bmatrix} h_{1n}^{Tx} & h_{2\to1n}^{Tx} \\ h_{1\to2n}^{Tx} & h_{2n}^{Tx} \end{bmatrix} \begin{bmatrix} |a_{TX}|^{n-1} a_{TX} \\ |b_{TX}|^{n-1} b_{TX} \end{bmatrix} \right).$$

Notably, $h_{1n}^{Tx}$ is a transfer function for the nonlinear component from the first port of the first QBPA to the third port of the first QBPA, $h_{2n}^{Tx}$ is a transfer function for the nonlinear component from the first port of the second QBPA to the third port of the second QBPA, $h_{2\to1n}^{Tx}$ is a transfer function for the nonlinear component from the first port of the second QBPA to the third port of the first QBPA, and $h_{1\to2n}^{Tx}$ is a transfer function for the nonlinear component from the first port of the first QBPA to the third port of the second QBPA.

In a more general case, SIC signals may also have nonlinear components. Therefore, for a case that both Tx and SIC signals have nonlinear components, $f(a_{TX}, b_{TX}) + g(a_{SIC}, b_{SIC}) = 0$ is desired. $f$ and $g$ are nonlinear functions representing transfer functions including nonlinear components.

According to an embodiment of the disclosure, $a_{TX}$ and $b_{TX}$ may be known to the device 200, and the transmit input signal 1011/1011' and/or the cancellation input signal 1041/1041' of at least one of the first QBPA 100 and the second QBPA 100' may comprise nonlinear components. The SIC signals may be defined by a solution of the following:

5

$$\underset{\Sigma|a_{SIC}|^{n-1}a_{SIC},\Sigma|b_{SIC}|^{n-1}b_{SIC}}{\text{argmin}} \{f(a_{TX}, b_{TX}) + g(a_{SIC}, b_{SIC})\}.$$

Notably, the solution present in the previous embodiments can be extended for a larger number of chains, for example, in the case of three chains of QBPA. According to embodiments of the disclosure, all leakage signals is desired to be zero, so a matrix form can be derived as follow:

$$\begin{bmatrix} h_1^{Tx} & h_{2\rightarrow1}^{Tx} & h_{3\rightarrow1}^{Tx} \\ h_{1\rightarrow2}^{Tx} & h_2^{Tx} & h_{3\rightarrow2}^{Tx} \\ h_{1\rightarrow3}^{Tx} & h_{2\rightarrow3}^{Tx} & h_3^{Tx} \end{bmatrix}\begin{bmatrix} a_{TX} \\ b_{TX} \\ c_{TX} \end{bmatrix} + \begin{bmatrix} h_1^{SIC} & h_{2\rightarrow1}^{SIC} & h_{3\rightarrow1}^{SIC} \\ h_{1\rightarrow2}^{SIC} & h_2^{SIC} & h_{3\rightarrow2}^{SIC} \\ h_{1\rightarrow3}^{SIC} & h_{2\rightarrow3}^{SIC} & h_3^{SIC} \end{bmatrix}\begin{bmatrix} a_{SIC} \\ b_{SIC} \\ c_{SIC} \end{bmatrix} = \begin{bmatrix} 0 \\ 0 \\ 0 \end{bmatrix}.$$

According to this embodiment, the SIC signals to be injected may be computed as:

$$\begin{bmatrix} a_{SIC} \\ b_{SIC} \\ c_{SIC} \end{bmatrix} = -\begin{bmatrix} h_1^{SIC} & h_{2\rightarrow1}^{SIC} & h_{3\rightarrow1}^{SIC} \\ h_{1\rightarrow2}^{SIC} & h_2^{SIC} & h_{3\rightarrow2}^{SIC} \\ h_{1\rightarrow3}^{SIC} & h_{2\rightarrow3}^{SIC} & h_3^{SIC} \end{bmatrix}^{-1}\begin{bmatrix} h_1^{Tx} & h_{2\rightarrow1}^{Tx} & h_{3\rightarrow1}^{Tx} \\ h_{1\rightarrow2}^{Tx} & h_2^{Tx} & h_{3\rightarrow2}^{Tx} \\ h_{1\rightarrow3}^{Tx} & h_{2\rightarrow3}^{Tx} & h_3^{Tx} \end{bmatrix}\begin{bmatrix} a_{TX} \\ b_{TX} \\ c_{TX} \end{bmatrix}.$$

Similar with the embodiments of two QBPAs, for the computation of SIC signals, Tx input signals are known to the device 200. $c_{TX}$ is a transmit input signal of the third QBPA and known to the device 200, and $h_3^{Tx}$ is a transfer function from the first port of the third QBPA to the third port of the third QBPA. $c_{SIC}$ is the cancellation input signal of the third QBPA, and $h_3^{SIC}$ is a transfer function from the fourth port of the third QBPA to the third port of the third QBPA. $h_{3\rightarrow1}^{Tx}$ is a transfer function from the first port of the third QBPA to the third port 101 of the first QBPA 100, $h_{3\rightarrow1}^{SIC}$ is a transfer function from the fourth port of the third QBPA to the third port 103 of the first QBPA 100, $h_{1\rightarrow3}^{Tx}$ is a transfer function from the first port 101 of the first QBPA 100 to the third port of the third QBPA, $h_{1\rightarrow3}^{SIC}$ is a transfer function from the fourth port 104 of the first QBPA 100 to the third port of the third QBPA, $h_{3\rightarrow2}^{Tx}$ is a transfer function from the first port of the third QBPA to the third port 103' of the second QBPA 100', $h_{3\rightarrow2}^{SIC}$ is a transfer function from the fourth port of the third QBPA to the third port 103' of the second QBPA 100', $h_{2\rightarrow3}^{Tx}$ is a transfer function from the first port 101' of the second QBPA 100' to the third port of the third QBPA, and $h_{2\rightarrow3}^{SIC}$ is a transfer function from the fourth port of the second QBPA to the third port of the third QBPA.

Notably, this disclosure can be applied to a more general case of the multiple QBPAs comprising m QBPAs, m being a positive integer larger than 3. According to an embodiment of the disclosure, the device 200 may be configured to obtain transfer functions of the multiple QBPAs. Further, the device 200 may be configured to determine the SIC signals of the multiple QBPAs using a matrix:

$$\begin{bmatrix} a_{SIC} \\ b_{SIC} \\ \vdots \\ z_{SIC} \end{bmatrix} = -\begin{bmatrix} h_1^{SIC} & h_{2\rightarrow1}^{SIC} & \cdots & h_{m\rightarrow1}^{SIC} \\ h_{1\rightarrow2}^{SIC} & h_2^{SIC} & \cdots & h_{m\rightarrow2}^{SIC} \\ \vdots & \vdots & \vdots & \vdots \\ h_{1\rightarrow m}^{SIC} & h_{2\rightarrow m}^{SIC} & \cdots & h_m^{SIC} \end{bmatrix}^{-1}\begin{bmatrix} h_1^{Tx} & h_{2\rightarrow1}^{Tx} & \cdots & h_{m\rightarrow1}^{Tx} \\ h_{1\rightarrow2}^{Tx} & h_2^{Tx} & \cdots & h_{m\rightarrow2}^{Tx} \\ \vdots & \vdots & \vdots & \vdots \\ h_{1\rightarrow m}^{Tx} & h_{2\rightarrow m}^{Tx} & \cdots & h_m^{Tx} \end{bmatrix}\begin{bmatrix} a_{TX} \\ b_{TX} \\ \vdots \\ z_{TX} \end{bmatrix}.$$

Similar as described in the previous embodiments, $z_{TX}$ is a transmit input signal of the $m^{th}$ QBPA and known to the device 200. $z_{SIC}$ is a cancellation input signal of the $m^{th}$ QBPA. All transmit input signals are known to the device 200. $h_m^{Tx}$ is a transfer function from the first port of the $m^{th}$ QBPA to the third port of the $m^{th}$ QBPA, and $h_m^{SIC}$ is a transfer function from the fourth port of the $m^{th}$ QBPA to the third port of the $m^{th}$ QBPA. $h_{m\rightarrow1}^{Tx}$ is a transfer function from the first port of the $m^{th}$ QBPA to the third port 103 of the first QBPA 100, and $h_{m\rightarrow1}^{SIC}$ is a transfer function from the fourth port of the $m^{th}$ QBPA to the third port 103 of the first QBPA 100. $h_{1\rightarrow m}^{Tx}$ is a transfer function from the first port 101 of the first QBPA 100 to the third port of the $m^{th}$ QBPA, and $h_{1\rightarrow m}^{SIC}$ is a transfer function from the fourth port 104 of the first QBPA 100 to the third port of the $m^{th}$ QBPA. $h_{m\rightarrow2}^{Tx}$ is a transfer function from the first port of the $m^{th}$ QBPA to the third port 103' of the second QBPA 100', and $h_{m\rightarrow2}^{SIC}$ is a transfer function from the fourth port of the $m^{th}$ QBPA to the third port 103' of the second QBPA 100'. $h_{2\rightarrow m}^{Tx}$ is a transfer function from the first port 101' of the second QBPA 100' to the third port of the $m^{th}$ QBPA, and $h_{2\rightarrow m}^{SIC}$ is a transfer function from the fourth port 104' of the second QBPA 100' to the third port of the $m^{th}$ QBPA.

It should be noted that, the solution considering nonlinear components (in Tx signal and/or SIC signals) can be extended for the general case of multiple QBPAs comprising m QBPAs as well. The previous described formulas can be adapted to apply for the m chains of QBPA.

The computation of the SIC signals to be transmitted such that the self-interference is zeroed are described in the previous embodiments. Further, in order to compute these signals, all transfer functions are needed. Optionally, according to embodiments of the disclosure, the device 200 may be configured to obtain all transfer functions. Possibly, the device 200 may also be configured to estimate all transfer functions, including both intra-chain and inter-chain transfer functions.

Optionally, the device 200 may be configured to estimate a transfer function at the third port 103 of the respective QBPA 100, by transmitting one or more training sequences to first ports 101, 101' and fourth ports 104, 104' of the multiple QBPAs. Possibly, the training sequences may be long training field (LTF) sequences.

Notably, existing IEEE 802.11 or IEEE 1609 signals may be used for channel estimation, for instance:

- P-Matrix based orthogonal high throughput (HT) / very high throughput (VHT) / high efficiency (HE) / extreme high throughput (EHT) LTF sequences transmitted from all Tx and SIC inputs, simultaneously;

- HT/VHT/HE/EHT-LTF sequences transmitted sequentially from all Tx and SIC inputs;

- Interleaved HT/VHT/HE/EHT-LTF sequences transmitted simultaneously from all Tx and SIC inputs (each input transmitting on a different subcarrier).

Optionally, the device 200 may be further configured to operate in a half-duplex mode and/or a full-duplex mode, wherein the half duplex mode comprises a transmit mode and a receive mode.

Notably, the device 200 can be used in a HD mode and/or a FD mode. In HD mode, when the device 200 operates in Tx mode, there is no signal exists in the second ports and the third ports of the multiple QBPAs; when the device 200 operates in Rx mode, the first ports and the fourth ports of the multiple QBPAs may be switched off, that is, the Tx and SIC signals are zero in this case.

It should be noted that, when a signal is transmitted in the QBPA 100, there is always a leakage signal to the third port 103, even if no Rx signal received. A low noise amplifier (LNA) in the receive path (connected to the third port 103) needs to be protected from the leakage signal. Thus, it is also desired to minimize this leakage for HD mode similarly as the approach in FD mode. That is, in HD mode, it is also possible to use the cancellation to prevent the receive chain from a very strong leakage during the transmission. Notably, for this case, the purpose of the cancellation in HD mode is different from the FD mode. For instance, the functional structures of the cancellation may be the same, but the target level of cancellation may be different for HD and FD modes.

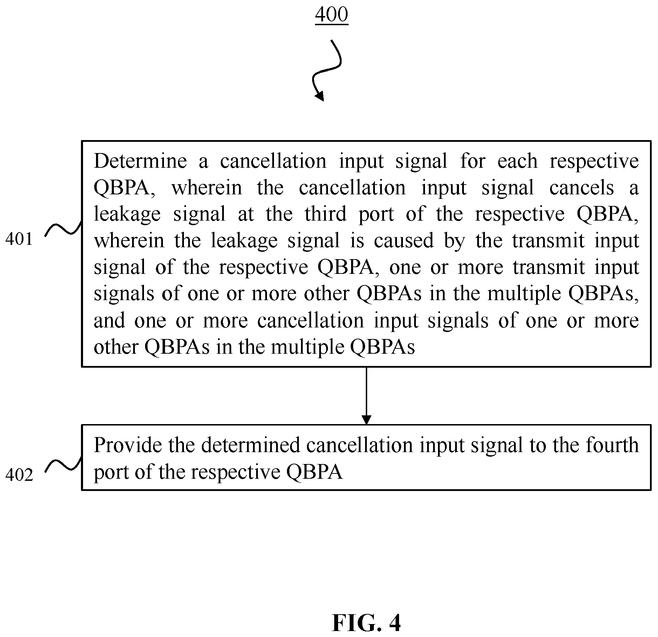

FIG. 4 shows a method 400 according to an embodiment of the disclosure. The method 400 is for cancelling interference of multiple QBPAs 100, 100', in particular each QBPA 100 may be the QBPA as shown in one of FIG. 1 to FIG. 3. The method 400 may be performed by a device 200, where the device 200 may be the device as shown in FIG. 2. The method 400 comprises a step 401 of determining a cancellation input signal 1041 for each respective QBPA 100. In particular, the cancellation input signal 1041 cancels a leakage signal at the third port 103 of the respective QBPA 100, wherein the leakage signal is caused by the transmit input signal 1011 of the respective QBPA 100, one or more transmit input signals 1011' of one or more other QBPAs 100' of the multiple QBPAs 100, 100', and one or more cancellation input signals 1041' of one or more other QBPAs 100' of the multiple QBPAs 100, 100'. Further, the method 400 comprises a step 402 of providing the determined cancellation input signal 1041 to the fourth port 104 of the respective QBPA 100.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the device 200, comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the device 200 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

**Claims**

1. A device (200) for cancelling interference of multiple Quadrature Balanced Power Amplifiers, QBPAs (100, 100'), wherein each QBPA (100, 100') comprises a first port (101, 101') for receiving a transmit input signal (1011, 1011'), a second port (102, 102') for transmitting a transmit signal (1021, 1021') and receiving a receive signal (1022, 1022'), a third port (103, 103') for providing a receive output signal (1031, 1031'), and a fourth port (104, 104') for receiving a cancellation input signal (1041, 1041'),

   wherein the device (200) is configured to:

   determine a cancellation input signal (1041) for each respective QBPA (100), so as to enable the cancellation input signal (1041) to cancel a leakage signal at the third port (103) of the respective QBPA (100), wherein the leakage signal is caused by the transmit input signal (1011) of the respective QBPA (100), one or more transmit input signals (1011') of one or more other QBPAs (100') of the multiple QBPAs (100, 100'), and one or more cancellation input signals (1041') of one or more other QBPAs (100') of the multiple QBPAs (100, 100'); and
   provide the determined cancellation input signal (1041) to the fourth port (104) of the respective QBPA (100);
   wherein the multiple QBPAs (100, 100') comprise a first QBPA (100) and a second QBPA (100'),
   wherein the device (200) is further configured to determine the leakage signal at the third port (103) of the respective QBPA (100) based on transfer functions obtained or estimated by the device (200), and determine the cancellation input signal (1041) for each respective QBPA (100) using the determined leakage signal, wherein the leakage signal at the first QBPA (100) comprises $h_1^{Tx} a_{TX}$, $h_1^{SIC} a_{SIC}$, $h_{2\to 1}^{Tx} b_{TX}$, and $h_{2\to 1}^{SIC} b_{SIC}$, and the leakage signal at the second QBPA (100') comprises $h_2^{Tx} b_{TX}$, $h_2^{SIC} b_{SIC}$, $h_{1\to 2}^{Tx} a_{TX}$, and $h_{1\to 2}^{SIC} a_{SIC}$,

   wherein:

   $a_{SIC}$ is a cancellation input signal (1041) of the first QBPA (100),
   $b_{SIC}$ is a cancellation input signal (1041') of the second QBPA (100'),
   $a_{TX}$ is a transmit input signal (1011) of the first QBPA (100),
   $b_{TX}$ is a transmit input signal (1011') of the second QBPA (100'),
   $h_1^{Tx}$ is a transfer function from the first port (101) of the first QBPA (100) to the third port (103) of the first QBPA (100),
   $h_1^{SIC}$ is a transfer function from the fourth port (104) of the first QBPA (100) to the third port (103) of the first QBPA (100),
   $h_2^{Tx}$ is a transfer function from the first port (101') of the second QBPA (100') to the third port (103') of the second QBPA (100'),
   $h_2^{SIC}$ is a transfer function from the fourth port (104') of the second QBPA (100') to the third port (103') of the second QBPA (100'),
   $h_{2\to 1}^{Tx}$ is a transfer function from the first port (101') of the second QBPA (100') to the third port (103) of the first QBPA (100),
   $h_{2\to 1}^{SIC}$ is a transfer function from the fourth port (104') of the second QBPA (100') to the third port (103) of the first QBPA (100),
   $h_{1\to 2}^{Tx}$ is a transfer function from the first port (101) of the first QBPA (100) to the third port (103') of the second QBPA (100'), and
   $h_{1\to 2}^{SIC}$ is a transfer function from the fourth port (104) of the first QBPA (100) to the third port (103') of the second QBPA (100'),
wherein the device (200) is configured to determine the cancellation input signals $a_{SIC}$ and $b_{SIC}$ that make the leakage signal at the first QBPA (100) and the leakage signal at the second QBPA (100') to be zero.

2. The device (200) according to claim 1, wherein $a_{TX}$ and $b_{TX}$ are known to the device (200), and the device (200) is further configured to:

obtain transfer functions of the first QBPA (100) and the second QBPA (100'); and
determine the cancellation input signals (1041, 1041') of the first QBPA (100) and the second QBPA (100') by using a matrix:

$$
\begin{bmatrix} a_{SIC} \\ b_{SIC} \end{bmatrix} = - \begin{bmatrix} h_1^{SIC} & h_{2\to1}^{SIC} \\ h_{1\to2}^{SIC} & h_2^{SIC} \end{bmatrix}^{-1} \begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix}.
$$

3. The device (200) according to claim 1, wherein $a_{TX}$ and $b_{TX}$ are known to the device (200), wherein the transmit input signal (1011/1011') of at least one of the first QBPA (100) and the second QBPA (100') comprises nonlinear components, and the device (200) is further configured to:

obtain transfer functions of the first QBPA (100) and the second QBPA (100'); and
determine the cancellation input signals (1041, 1041') of the first QBPA (100) and the second QBPA (100') by using a matrix:

$$
\begin{bmatrix} a_{SIC} \\ b_{SIC} \end{bmatrix} = - \begin{bmatrix} h_1^{SIC} & h_{2\to1}^{SIC} \\ h_{1\to2}^{SIC} & h_2^{SIC} \end{bmatrix}^{-1} \left( \begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix} + \Sigma \begin{bmatrix} h_{1n}^{Tx} & h_{2\to1n}^{Tx} \\ h_{1\to2n}^{Tx} & h_{2n}^{Tx} \end{bmatrix} \begin{bmatrix} |a_{TX}|^{n-1} a_{TX} \\ |b_{TX}|^{n-1} b_{TX} \end{bmatrix} \right),
$$

wherein:

n corresponds to a nonlinear component power order, n being a positive integer,
$h_{1n}^{Tx}$ is a transfer function for the nonlinear component from the first port (101) of the first QBPA (100) to the third port (103) of the first QBPA (100),
$h_{2n}^{Tx}$ is a transfer function for the nonlinear component from the first port (101') of the second QBPA (100') to the third port (103') of the second QBPA (100'),
$h_{2\to1n}^{Tx}$ is a transfer function for the nonlinear component from the first port (101') of the second QBPA (100') to the third port (103) of the first QBPA (100), and
$h_{1\to2n}^{Tx}$ is a transfer function for the nonlinear component from the first port (101) of the first QBPA (100) to the third port (103') of the second QBPA (100').

4. The device (200) according to claim 1, wherein the transmit input signal (1011/1011') and/or the cancellation input signal (1041/1041') of at least one of the first QBPA (100) and the second QBPA (100') comprise nonlinear components, and the device (200) is further configured to:

determine the cancellation input signals (1041, 1041') of the first QBPA (100) and the second QBPA (100') by using:

$$
\underset{\Sigma |a_{SIC}|^{n-1} a_{SIC}, \Sigma |b_{SIC}|^{n-1} b_{SIC}}{\text{argmin}} \{f(a_{TX}, b_{TX}) + g(a_{SIC}, b_{SIC})\},
$$

wherein $f$ and $g$ are nonlinear functions representing transfer functions including nonlinear components.

5. The device (200) according to claim 1, wherein the multiple QBPAs (100, 100') further comprise a third QBPA, and the device (200) is further configured to:

obtain transfer functions of the first QBPA (100), the second QBPA (100'), and the third QBPA; and
determine the cancellation input signals of the first QBPA (100), the second QBPA (100') and the third QBPA using a matrix:

$$\begin{bmatrix} a_{SIC} \\ b_{SIC} \\ c_{SIC} \end{bmatrix} = - \begin{bmatrix} h_1^{SIC} & h_{2\rightarrow1}^{SIC} & h_{3\rightarrow1}^{SIC} \\ h_{1\rightarrow2}^{SIC} & h_2^{SIC} & h_{3\rightarrow2}^{SIC} \\ h_{1\rightarrow3}^{SIC} & h_{2\rightarrow3}^{SIC} & h_3^{SIC} \end{bmatrix}^{-1} \begin{bmatrix} h_1^{Tx} & h_{2\rightarrow1}^{Tx} & h_{3\rightarrow1}^{Tx} \\ h_{1\rightarrow2}^{Tx} & h_2^{Tx} & h_{3\rightarrow2}^{Tx} \\ h_{1\rightarrow3}^{Tx} & h_{2\rightarrow3}^{Tx} & h_3^{Tx} \end{bmatrix} \begin{bmatrix} a_{TX} \\ b_{TX} \\ c_{TX} \end{bmatrix},$$

wherein:

$a_{TX}$, $b_{TX}$ are known to the device,

$c_{TX}$ is a transmit input signal of the third QBPA and known to the device (200),

$h_3^{Tx}$ is a transfer function from the first port of the third QBPA to the third port of the third QBPA,

$c_{SIC}$ is the cancellation input signal of the third QBPA,

$h_3^{SIC}$ is a transfer function from the fourth port of the third QBPA to the third port of the third QBPA,

$h_{3\rightarrow1}^{Tx}$ is a transfer function from the first port of the third QBPA to the third port (103) of the first QBPA (100),

$h_{3\rightarrow1}^{SIC}$ is a transfer function from the fourth port of the third QBPA to the third port (103) of the first QBPA (100),

$h_{1\rightarrow3}^{Tx}$ is a transfer function from the first port (101) of the first QBPA (100) to the third port of the third QBPA,

$h_{1\rightarrow3}^{SIC}$ is a transfer function from the fourth port (104) of the first QBPA (100) to the third port of the third QBPA,

$h_{3\rightarrow2}^{Tx}$ is a transfer function from the first port of the third QBPA to the third port (103') of the second QBPA (100'),

$h_{3\rightarrow2}^{SIC}$ is a transfer function from the fourth port of the third QBPA to the third port (103') of the second QBPA (100'),

$h_{2\rightarrow3}^{Tx}$ is a transfer function from the first port (101') of the second QBPA (100') to the third port of the third QBPA, and

$h_{2\rightarrow3}^{SIC}$ is a transfer function from the fourth port (104') of the second QBPA (100') to the third port of the third QBPA.

6. The device (200) according to claim 1, wherein the multiple QBPAs (100, 100') comprise m QBPAs, m being a positive integer bigger that 3, and the device (200) is further configured to:

obtain transfer functions of the multiple QBPAs (100, 100'); and
determine the cancellation input signals (1041, 1041') of the multiple QBPAs (100, 100') using a matrix:

$$\begin{bmatrix} a_{SIC} \\ b_{SIC} \\ \vdots \\ z_{SIC} \end{bmatrix} = - \begin{bmatrix} h_1^{SIC} & h_{2\rightarrow1}^{SIC} & \cdots & h_{m\rightarrow1}^{SIC} \\ h_{1\rightarrow2}^{SIC} & h_2^{SIC} & \cdots & h_{m\rightarrow2}^{SIC} \\ \vdots & \vdots & \vdots & \vdots \\ h_{1\rightarrow m}^{SIC} & h_{2\rightarrow m}^{SIC} & \cdots & h_m^{SIC} \end{bmatrix}^{-1} \begin{bmatrix} h_1^{Tx} & h_{2\rightarrow1}^{Tx} & \cdots & h_{m\rightarrow1}^{Tx} \\ h_{1\rightarrow2}^{Tx} & h_2^{Tx} & \cdots & h_{m\rightarrow2}^{Tx} \\ \vdots & \vdots & \vdots & \vdots \\ h_{1\rightarrow m}^{Tx} & h_{2\rightarrow m}^{Tx} & \cdots & h_m^{Tx} \end{bmatrix} \begin{bmatrix} a_{TX} \\ b_{TX} \\ \vdots \\ z_{TX} \end{bmatrix},$$

wherein:

$a_{TX}$, $b_{TX}$ are known to the device (200),

$z_{TX}$ is a transmit input signal of the $m^{th}$ QBPA and known to the device (200),

$h_m^{Tx}$ is a transfer function from the first port of the $m^{th}$ QBPA to the third port of the $m^{th}$ QBPA,

$z_{SIC}$ is a cancellation input signal of the $m^{th}$ QBPA,

$h_m^{SIC}$ is a transfer function from the fourth port of the $m^{th}$ QBPA to the third port of the $m^{th}$ QBPA,

$h_{m\rightarrow1}^{Tx}$ is a transfer function from the first port of the $m^{th}$ QBPA to the third port (103) of the first QBPA (100),

$h_{m\rightarrow1}^{SIC}$ is a transfer function from the fourth port of the $m^{th}$ QBPA to the third port (103) of the first QBPA (100),

$h_{1\rightarrow m}^{Tx}$ is a transfer function from the first port (101) of the first QBPA (100) to the third port of the $m^{th}$ QBPA,

$h_{1\rightarrow m}^{SIC}$ is a transfer function from the fourth port (104) of the first QBPA (100) to the third port of the $m^{th}$ QBPA,

$h_{m\rightarrow2}^{Tx}$ is a transfer function from the first port of the $m^{th}$ QBPA to the third port (103') of the second QBPA (100'),

$h_{m\rightarrow2}^{SIC}$ is a transfer function from the fourth port of the $m^{th}$ QBPA to the third port (103') of the second QBPA (100'),

$h_{2\rightarrow m}^{Tx}$ is a transfer function from the first port (101') of the second QBPA (100') to the third port of the $m^{th}$ QBPA, and

$h_{2 \to m}^{SIC}$ is a transfer function from the fourth port (104') of the second QBPA (100') to the third port of the m$^{th}$ QBPA.

7.  The device (200) according to one of the claims 1 to 6, further configured to:
    estimate a transfer function at the third port (103) of the respective QBPA (100), by transmitting one or more training sequences to first ports (101, 101') and fourth ports (104, 104') of the multiple QBPAs (100, 100').

8.  The device (200) according to claim 7, wherein the one or more training sequences are P-matrix based orthogonal training sequences, and the device (200) is configured to:
    estimate the transfer function by simultaneously transmitting the one or more training sequences to first ports (101, 101') and fourth ports (104, 104') of the multiple QBPAs (100, 100').

9.  The device (200) according to claim 7, further configured to:
    estimate the transfer function by sequentially transmitting the one or more training sequences to first ports (101, 101') and fourth ports (104, 104') of the multiple QBPAs (100, 100').

10. The device (200) according to claim 7, further configured to:

    interleave the one or more training sequences in frequency domain; and
    estimate the transfer function by simultaneously transmitting the interleaved one or more training sequences to first ports (101, 101') and fourth ports (104, 104') of the multiple QBPAs (100, 100').

11. Method (400) for cancelling interference of multiple Quadrature Balanced Power Amplifiers, QBPAs (100, 100'), wherein each QBPA (100, 100') comprises a first port (101, 101') for receiving a transmit input signal (1011, 1011'), a second port (102, 102')for transmitting a transmit signal (1021, 1021') and receiving a receive signal (1022, 1022'), a third port (103, 103')for providing a receive output signal (1031, 1031'), and a fourth port (104, 104') for receiving a cancellation input signal (1041, 1041'),
    wherein the method (400) comprising:

    determining (401) a cancellation input signal (1041) for each respective QBPA (100), wherein the cancellation input signal (1041) cancels a leakage signal at the third port (103) of the respective QBPA (100), wherein the leakage signal is caused by the transmit input signal (1011) of the respective QBPA (100), one or more transmit input signals (1011')of one or more other QBPAs (100') in the multiple QBPAs (100, 100'), and one or more cancellation input signals (1041') of one or more other QBPAs (100') in the multiple QBPAs (100, 100'); and
    providing (402) the determined cancellation input signal (1041) to the fourth port (104) of the respective QBPA (100),
    wherein the method (400) further comprises: determining the leakage signal at the third port (103) of the respective QBPA (100) based on transfer functions obtained or estimated by the device (200), and determining the cancellation input signal (1041) for each respective QBPA (100) using the determined leakage signal, wherein the multiple QBPAs (100, 100') comprise a first QBPA (100) and a second QBPA (100'),

    wherein the leakage signal at the first QBPA (100) comprises $h_1^{Tx} a_{TX}$, $h_1^{SIC} a_{SIC}$, $h_{2 \to 1}^{Tx} b_{TX}$, and $h_{2 \to 1}^{SIC} b_{SIC}$, and the leakage signal at the second QBPA (100') comprises $h_2^{Tx} b_{TX}$, $h_2^{SIC} b_{SIC}$, $h_{1 \to 2}^{Tx} a_{TX}$, and $h_{1 \to 2}^{SIC} a_{SIC}$,
    wherein:

    $a_{SIC}$ is a cancellation input signal (1041) of the first QBPA (100),
    $b_{SIC}$ is a cancellation input signal (1041') of the second QBPA (100'),
    $a_{TX}$ is a transmit input signal (1011) of the first QBPA (100),
    $b_{TX}$ is a transmit input signal (1011') of the second QBPA (100'),
    $h_1^{Tx}$ is a transfer function from the first port (101) of the first QBPA (100) to the third port (103) of the first QBPA (100),
    $h_1^{SIC}$ is a transfer function from the fourth port (104) of the first QBPA (100) to the third port (103) of the first QBPA (100),
    $h_2^{Tx}$ is a transfer function from the first port (101') of the second QBPA (100') to the third port (103') of the second QBPA (100'),
    $h_2^{SIC}$ is a transfer function from the fourth port (104') of the second QBPA (100') to the third port (103') of the second QBPA (100'),

$h_{2\to1}^{Tx}$ is a transfer function from the first port (101') of the second QBPA (100') to the third port (103) of the first QBPA (100),

$h_{2\to1}^{SIC}$ is a transfer function from the fourth port (104') of the second QBPA (100') to the third port (103) of the first QBPA (100),

$h_{1\to2}^{Tx}$ is a transfer function from the first port (101) of the first QBPA (100) to the third port (103') of the second QBPA (100'), and

$h_{1\to2}^{SIC}$ is a transfer function from the fourth port (104) of the first QBPA (100) to the third port (103') of the second QBPA (100'),

wherein the determining a cancellation input signal (1041) for each respective QBPA (100) comprises determining the cancellation input signals $a_{SIC}$ and $b_{SIC}$ that make the leakage signal at the first QBPA (100) and the leakage signal at the second QBPA (100') to be zero.

**12.** A computer program product comprising a program code for carrying out, when implemented on a processor, the method (400) according to claim 11.

## Patentansprüche

**1.** Vorrichtung (200) zur Interferenzunterdrückung mehrerer quadraturausgeglichenen Leistungsverstärker, QBPAs (100, 100'), wobei jeder QBPA (100, 100') einen ersten Port (101, 101') zum Empfangen eines Sendeeingangssignals (1011, 1011'), einen zweiten Port (102, 102') zum Senden eines Sendesignals (1021, 1021') und Empfangen eines Empfangssignals (1022, 1022'), einen dritten Port (103, 103') zum Bereitstellen eines Empfangsausgangssignals (1031, 1031') und einen vierten Port (104, 104') zum Empfangen eines Unterdrückungseingangssignals (1041, 1041') umfasst, wobei die Vorrichtung (200) dazu konfiguriert ist:

ein Unterdrückungseingangssignals (1041) für jeden jeweiligen QBPA (100) zu bestimmen, um das Unterdrückungseingangssignal (1041) in die Lage zu versetzen, ein Lecksignal an dem dritten Port (103) des jeweiligen QBPA (100) zu unterdrücken, wobei das Lecksignal durch das Sendeeingangssignal (1011) des jeweiligen QBPA (100), ein oder mehrere Sendeeingangssignale (1011') eines oder mehrerer anderer QBPAs (100') der mehreren QBPAs (100, 100') und ein oder mehrere Unterdrückungseingangssignale (1041') eines oder mehrerer anderer QBPAs (100') der mehreren QBPAs (100, 100') verursacht wird; und

dem vierten Port (104) des jeweiligen QBPA (100) das bestimmte Unterdrückungseingangssignal (1041) bereitzustellen;

wobei die mehreren QBPAs (100, 100') einen ersten QBPA (100) und einen zweiten QBPA (100') umfassen, wobei die Vorrichtung (200) ferner dazu konfiguriert ist, das Lecksignal an dem dritten Port (103) des jeweiligen QBPA (100) basierend auf den durch die Vorrichtung (200) erlangten oder geschätzten Übertragungsfunktionen zu bestimmen und das Unterdrückungseingangssignal (1041) für jeden jeweiligen QBPA (100) unter Verwendung des bestimmten Lecksignals zu bestimmen, wobei das Lecksignal an dem ersten QBPA (100)

$h_1^{Tx}a_{TX}, h_1^{SIC}a_{SIC}, h_{2\to1}^{Tx}b_{TX}$ , und $h_{2\to1}^{SIC}b_{SIC}$ , umfasst und das Lecksignal an dem zweiten QBPA (100')

$h_2^{Tx}b_{TX}, h_2^{SIC}b_{SIC}, h_{1\to2}^{Tx}a_{TX}$ , und $h_{1\to2}^{SIC}a_{SIC}$ , umfasst,

wobei:

$a_{SIC}$ ein Unterdrückungseingangssignal (1041) des ersten QBPA (100) ist,

$b_{SIC}$ ein Unterdrückungseingangssignal (1041') des zweiten QBPA (100') ist,

$a_{TX}$ ein Sendeeingangssignal (1011) des ersten QBPA (100) ist,

$b_{TX}$ ein Sendeeingangssignal (1011') des zweiten QBPA (100') ist,

$h_1^{Tx}$ eine Übertragungsfunktion aus dem ersten Port (101) des ersten QBPA (100) zu dem dritten Port (103) des ersten QBPA (100) ist,

$h_1^{SIC}$ eine Übertragungsfunktion aus dem vierten Port (104) des ersten QBPA (100) zu dem dritten Port (103) des ersten QBPA (100) ist,

$h_2^{Tx}$ eine Übertragungsfunktion aus dem ersten Port (101') des zweiten QBPA (100') zu dem dritten Port (103') des zweiten QBPA (100') ist,

$h_2^{SIC}$ eine Übertragungsfunktion aus dem vierten Port (104') des zweiten QBPA (100') zu dem dritten Port (103') des zweiten QBPA (100') ist,

$h_{2\to1}^{Tx}$ eine Übertragungsfunktion aus dem ersten Port (101') des zweiten QBPA (100') zu dem dritten Port (103') des ersten QBPA (100) ist,

$h_{2\to1}^{SIC}$ eine Übertragungsfunktion aus dem vierten Port (104') des zweiten QBPA (100') zu dem dritten Port (103) des ersten QBPA (100) ist,

$h_{1\to2}^{Tx}$ eine Übertragungsfunktion aus dem ersten Port (101) des ersten QBPA (100) zu dem dritten Port (103') des zweiten QBPA (100') ist, und

$h_{1\to2}^{SIC}$ eine Übertragungsfunktion aus dem vierten Port (104) des ersten QBPA (100) zu dem dritten Port (103') des zweiten QBPA (100') ist,

wobei die Vorrichtung (200) dazu konfiguriert ist, die Unterdrückungseingangssignale $a_{SIC}$ und $b_{SIC}$ zu bestimmen, die das Lecksignal an dem ersten QBPA (100) und das Lecksignal an dem zweiten QBPA (100') auf Null bringen.

2. Vorrichtung (200) nach Anspruch 1, wobei $a_{TX}$ und $b_{TX}$ der Vorrichtung (200) bekannt sind und die Vorrichtung (200) ferner dazu konfiguriert ist:

Übertragungsfunktionen des ersten QBPA (100) und des zweiten QBPA (100') zu erlangen; und
die Unterdrückungseingangssignale (1041, 1041') des ersten QBPA (100) und des zweiten QBPA (100') unter Verwendung einer Matrix zu bestimmen:

$$\begin{bmatrix} a_{SIC} \\ b_{SIC} \end{bmatrix} = - \begin{bmatrix} h_1^{SIC} & h_{2\to1}^{SIC} \\ h_{1\to2}^{SIC} & h_2^{SIC} \end{bmatrix}^{-1} \begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix}.$$

3. Vorrichtung (200) nach Anspruch 1, wobei $a_{TX}$ und $b_{TX}$ der Vorrichtung (200) bekannt sind, wobei das Sendeeingangssignal (1011/1011') von mindestens einem des ersten QBPA (100) und des zweiten QBPA (100') nichtlineare Komponenten umfasst, und die Vorrichtung (200) ferner dazu konfiguriert ist:

Übertragungsfunktionen des ersten QBPA (100) und des zweiten QBPA (100') zu erlangen; und
die Unterdrückungseingangssignale (1041, 1041') des ersten QBPA (100) und des zweiten QBPA (100') unter Verwendung einer Matrix zu bestimmen:

$$\begin{bmatrix} a_{SIC} \\ b_{SIC} \end{bmatrix} = - \begin{bmatrix} h_1^{SIC} & h_{2\to1}^{SIC} \\ h_{1\to2}^{SIC} & h_2^{SIC} \end{bmatrix}^{-1} \left( \begin{bmatrix} h_1^{Tx} & h_{2\to1}^{Tx} \\ h_{1\to2}^{Tx} & h_2^{Tx} \end{bmatrix} \begin{bmatrix} a_{TX} \\ b_{TX} \end{bmatrix} + \sum \begin{bmatrix} h_{1n}^{Tx} & h_{2\to1n}^{Tx} \\ h_{1\to2n}^{Tx} & h_{2n}^{Tx} \end{bmatrix} \begin{bmatrix} |a_{TX}|^{n-1} a_{TX} \\ |b_{TX}|^{n-1} b_{TX} \end{bmatrix} \right).$$

wobei:

$n$ einer Leistungsordnung der nichtlinearen Komponente entspricht, wobei n eine positive ganze Zahl ist,

$h_{1n}^{Tx}$ eine Übertragungsfunktion für die nichtlineare Komponente aus dem ersten Port (101) des ersten QBPA (100) zu dem dritten Port (103) des ersten QBPA (100) ist,

$h_{2n}^{Tx}$ eine Übertragungsfunktion für die nichtlineare Komponente aus dem ersten Port (101') des zweiten QBPA (100') zu dem dritten Port (103') des zweiten QBPA (100') ist,

$h_{2\to1n}^{Tx}$ eine Übertragungsfunktion für die nichtlineare Komponente aus dem ersten Port (101') des zweiten QBPA (100') zu dem dritten Port (103) des ersten QBPA (100) ist, und

$h_{1\to2n}^{Tx}$ eine Übertragungsfunktion für die nichtlineare Komponente aus dem ersten Port (101) des ersten QBPA (100) zu dem dritten Port (103') des zweiten QBPA (100') ist.

4. Vorrichtung (200) nach Anspruch 1, wobei das Sendeeingangssignal (1011/1011') und/oder das Unterdrückungs-seingangssignal (1041/1041') von mindestens einem des ersten QBPA (100) und des zweiten QBPA (100') nichtlineare Komponenten umfassen, und die Vorrichtung (200) ferner dazu konfiguriert ist:

die Unterdrückungseingangssignale (1041, 1041') des ersten QBPA (100) und des zweiten QBPA (100') unter Verwendung des Folgenden zu bestimmen:

$$\underset{\Sigma|a_{SIC}|^{n-1}a_{SIC}, \Sigma|b_{SIC}|^{n-1}b_{SIC}}{\text{argmin}} \{f(a_{TX}, b_{TX}) + g(a_{SIC}, b_{SIC})\},$$

wobei $f$ und $g$ nichtlineare Funktionen sind, die Übertragungsfunktionen darstellen, welche nichtlineare Komponenten beinhalten.

5. Vorrichtung (200) nach Anspruch 1, wobei die mehreren QBPAs (100, 100') ferner einen dritten QBPA umfassen und die Vorrichtung (200) ferner dazu konfiguriert ist:

Übertragungsfunktionen des ersten QBPA (100), des zweiten QBPA (100') und des dritten QBPA zu erlangen; und
die Unterdrückungseingangssignale des ersten QBPA (100), des zweiten QBPA (100') und des dritten QBPA unter Verwendung einer Matrix zu bestimmen:

$$\begin{bmatrix} a_{SIC} \\ b_{SIC} \\ c_{SIC} \end{bmatrix} = - \begin{bmatrix} h_1^{SIC} & h_{2\to1}^{SIC} & h_{3\to1}^{SIC} \\ h_{1\to2}^{SIC} & h_2^{SIC} & h_{3\to2}^{SIC} \\ h_{1\to3}^{SIC} & h_{2\to3}^{SIC} & h_3^{SIC} \end{bmatrix}^{-1} \begin{bmatrix} h_1^{Tx} & h_{2\to1}^{Tx} & h_{3\to1}^{Tx} \\ h_{1\to2}^{Tx} & h_2^{Tx} & h_{3\to2}^{Tx} \\ h_{1\to3}^{Tx} & h_{2\to3}^{Tx} & h_3^{Tx} \end{bmatrix} \begin{bmatrix} a_{TX} \\ b_{TX} \\ c_{TX} \end{bmatrix},$$

wobei:

$a_{TX}$, $b_{TX}$ der Vorrichtung bekannt sind,
$c_{TX}$ ein Sendeeingangssignal des dritten QBPA und der Vorrichtung (200) bekannt ist,
$h_3^{Tx}$ eine Übertragungsfunktion aus dem ersten Port des dritten QBPA zu dem dritten Port des dritten QBPA ist,
$c_{SIC}$ das Unterdrückungseingangssignal des dritten QBPA ist,
$h_3^{SIC}$ eine Übertragungsfunktion aus dem vierten Port des dritten QBPA zu dem dritten Port des dritten QBPA ist,
$h_{3\to1}^{Tx}$ eine Übertragungsfunktion aus dem ersten Port des dritten QBPA zu dem dritten Port (103) des ersten QBPA (100) ist,
$h_{3\to1}^{SIC}$ eine Übertragungsfunktion aus dem vierten Port des dritten QBPA zu dem dritten Port (103) des ersten QBPA (100) ist,
$h_{1\to3}^{Tx}$ eine Übertragungsfunktion aus dem ersten Port (101) des ersten QBPA (100) zu dem dritten Port des dritten QBPA ist,
$h_{1\to3}^{SIC}$ eine Übertragungsfunktion aus dem vierten Port (104) des ersten QBPA (100) zu dem dritten Port des dritten QBPA ist,
$h_{3\to2}^{Tx}$ eine Übertragungsfunktion aus dem ersten Port des dritten QBPA zu dem dritten Port (103') des zweiten QBPA (100') ist,
$h_{3\to2}^{SIC}$ eine Übertragungsfunktion aus dem vierten Port des dritten QBPA zu dem dritten Port (103') des zweiten QBPA (100') ist,
$h_{2\to3}^{Tx}$ eine Übertragungsfunktion aus dem ersten Port (101') des zweiten QBPA (100') zu dem dritten Port des dritten QBPA ist, und
$h_{2\to3}^{SIC}$ eine Übertragungsfunktion aus dem vierten Port (104') des zweiten QBPA (100') zu dem dritten Port des dritten QBPA ist.

6. Vorrichtung (200) nach Anspruch 1, wobei die mehreren QBPAs (100, 100') m QBPAs umfassen, wobei m eine positive ganze Zahl größer als 3 ist und die Vorrichtung (200) ferner dazu konfiguriert ist:

Übertragungsfunktionen der mehreren QBPAs (100, 100') zu erlangen; und
die Unterdrückungseingangssignale (1041, 1041') der mehreren QBPAs (100, 100') unter Verwendung einer Matrix zu bestimmen:

$$\begin{bmatrix} a_{SIC} \\ b_{SIC} \\ \vdots \\ z_{SIC} \end{bmatrix} = - \begin{bmatrix} h_1^{SIC} & h_{2\to1}^{SIC} & \cdots & h_{m\to1}^{SIC} \\ h_{1\to2}^{SIC} & h_2^{SIC} & \cdots & h_{m\to2}^{SIC} \\ \vdots & \vdots & \vdots & \vdots \\ h_{1\to m}^{SIC} & h_{2\to m}^{SIC} & \cdots & h_m^{SIC} \end{bmatrix}^{-1} \begin{bmatrix} h_1^{Tx} & h_{2\to1}^{Tx} & \cdots & h_{m\to1}^{Tx} \\ h_{1\to2}^{Tx} & h_2^{Tx} & \cdots & h_{m\to2}^{Tx} \\ \vdots & \vdots & \vdots & \vdots \\ h_{1\to m}^{Tx} & h_{2\to m}^{Tx} & \cdots & h_m^{Tx} \end{bmatrix} \begin{bmatrix} a_{TX} \\ b_{TX} \\ \vdots \\ z_{TX} \end{bmatrix},$$

wobei:

$a_{TX}$, $b_{TX}$ der Vorrichtung (200) bekannt sind,

$z_{TX}$ ein Sendeeingangssignal des m-ten QBPA und der Vorrichtung (200) bekannt ist,

$h_m^{Tx}$ eine Übertragungsfunktion aus dem ersten Port des m-ten QBPA zu dem dritten Port des m-ten QBPA ist,

$z_{SIC}$ ein Unterdrückungseingangssignal des m-ten QBPA ist,

$h_m^{SIC}$ eine Übertragungsfunktion aus dem vierten Port des m-ten QBPA zu dem dritten Port des m-ten QBPA ist,

$h_{m\to1}^{Tx}$ eine Übertragungsfunktion aus dem ersten Port des m-ten QBPA zu dem dritten Port (103) des ersten QBPA (100) ist,

$h_{m\to1}^{SIC}$ eine Übertragungsfunktion aus dem vierten Port des m-ten QBPA zu dem dritten Port (103) des ersten QBPA (100) ist,

$h_{1\to m}^{Tx}$ eine Übertragungsfunktion aus dem ersten Port (101) des ersten QBPA (100) zu dem dritten Port des m-ten QBPA ist,

$h_{1\to m}^{SIC}$ eine Übertragungsfunktion aus dem vierten Port (104) des ersten QBPA (100) zu dem dritten Port des m-ten QBPA ist,

$h_{m\to2}^{Tx}$ eine Übertragungsfunktion aus dem ersten Port des m-ten QBPA zu dem dritten Port (103') des zweiten QBPA (100') ist,

$h_{m\to2}^{SIC}$ eine Übertragungsfunktion aus dem vierten Port des m-ten QBPA zu dem dritten Port (103') des zweiten QBPA (100') ist,

$h_{2\to m}^{Tx}$ eine Übertragungsfunktion aus dem ersten Port (101') des zweiten QBPA (100') zu dem dritten Port des m-ten QBPA ist, und $h_{2\to m}^{SIC}$ eine Übertragungsfunktion aus dem vierten Port (104') des zweiten QBPA (100') zu dem dritten Port des m-ten QBPA ist.

7. Vorrichtung (200) nach einem der Ansprüche 1 bis 6, die ferner dazu konfiguriert ist:
eine Übertragungsfunktion an dem dritten Port (103) des jeweiligen QBPA (100) durch Senden einer oder mehrerer Trainingssequenzen an erste Ports (101, 101') und vierte Ports (104, 104') der mehreren QBPAs (100, 100') zu schätzen.

8. Vorrichtung (200) nach Anspruch 7, wobei die eine oder die mehreren Trainingssequenzen orthogonale Trainingssequenzen auf der Basis einer P-Matrix sind und die Vorrichtung (200) dazu konfiguriert ist:
die Übertragungsfunktion durch gleichzeitiges Senden der einen oder der mehreren Trainingssequenzen an erste Ports (101, 101') und vierte Ports (104, 104') der mehreren QBPAs (100, 100') zu schätzen.

9. Vorrichtung (200) nach Anspruch 7, die ferner dazu konfiguriert ist:
die Übertragungsfunktion durch sequenzielles Senden der einen oder der mehreren Trainingssequenzen an erste Ports (101, 101') und vierte Ports (104, 104') der mehreren QBPAs (100, 100') zu schätzen.

10. Vorrichtung (200) nach Anspruch 7, die ferner dazu konfiguriert ist:

die eine oder die mehreren Trainingssequenzen im Frequenzbereich zu verschachteln; und
die Übertragungsfunktion durch gleichzeitiges Senden der einen oder der mehreren verschachtelten Trainingssequenzen an erste Ports (101, 101') und vierte Ports (104, 104') der mehreren QBPAs (100, 100') zu schätzen.

11. Verfahren (400) zur Interferenzunterdrückung mehrerer quadraturausgeglichenen Leistungsverstärker, QBPAs (100, 100'), wobei jeder QBPA (100, 100') einen ersten Port (101, 101') zum Empfangen eines Sendeeingangssignals (1011, 1011'), einen zweiten Port (102, 102') zum Senden eines Sendesignals (1021, 1021') und Empfangen eines Empfangssignals (1022, 1022'), einen dritten Port (103, 103') zum Bereitstellen eines Empfangsausgangssignals (1031, 1031') und einen vierten Port (104, 104') zum Empfangen eines Unterdrückungseingangssignals (1041, 1041') umfasst,

wobei das Verfahren (400) Folgendes umfasst:

Bestimmen (401) eines Unterdrückungseingangssignals (1041) für jeden jeweiligen QBPA (100), wobei das Unterdrückungseingangssignal (1041) ein Lecksignal an dem dritten Port (103) des jeweiligen QBPA (100) unterdrückt, wobei das Lecksignal durch das Sendeeingangssignal (1011) des jeweiligen QBPA (100), ein oder mehrere Sendeeingangssignale (1011') eines oder mehrerer anderer QBPAs (100') in den mehreren QBPAs (100, 100') und ein oder mehrere Unterdrückungseingangssignale (1041') eines oder mehrerer anderer QBPAs (100') in den mehreren QBPAs (100, 100') verursacht wird; und

Bereitstellen (402) des bestimmten Unterdrückungseingangssignals (1041) für den vierten Port (104) des jeweiligen QBPA (100),

wobei das Verfahren (400) ferner Folgendes umfasst: Bestimmen des Lecksignals an dem dritten Port (103) des jeweiligen QBPA (100) basierend auf Übertragungsfunktionen, die durch die Vorrichtung (200) erlangt oder geschätzt wurden, und Bestimmen des Unterdrückungseingangssignals (1041) für jeden jeweiligen QBPA (100) unter Verwendung des bestimmten Lecksignals, wobei die mehreren QBPAs (100, 100') einen ersten QBPA (100) und einen zweiten QBPA (100') umfassen,

wobei das Lecksignal an dem ersten QBPA (100) $h_1^{Tx} a_{TX}$, $h_1^{SIC} a_{SIC}$, $h_{2\to1}^{Tx} b_{TX}$, und $h_{2\to1}^{SIC} b_{SIC}$, umfasst und das Lecksignal an dem zweiten QBPA (100') $h_2^{Tx} b_{TX}$, $h_2^{SIC} b_{SIC}$, $h_{1\to2}^{Tx} a_{TX}$, und $h_{1\to2}^{SIC} a_{SIC}$, umfasst,

wobei:

$a_{SIC}$ ein Unterdrückungseingangssignal (1041) des ersten QBPA (100) ist,

$b_{SIC}$ ein Unterdrückungseingangssignal (1041') des zweiten QBPA (100') ist,

$a_{TX}$ ein Sendeeingangssignal (1011) des ersten QBPA (100) ist,

$b_{TX}$ ein Sendeeingangssignal (1011') des zweiten QBPA (100') ist,

$h_1^{Tx}$ eine Übertragungsfunktion aus dem ersten Port (101) des ersten QBPA (100) zu dem dritten Port (103) des ersten QBPA (100) ist,

$h_1^{SIC}$ eine Übertragungsfunktion aus dem vierten Port (104) des ersten QBPA (100) zu dem dritten Port (103) des ersten QBPA (100) ist,

$h_2^{Tx}$ eine Übertragungsfunktion aus dem ersten Port (101') des zweiten QBPA (100') zu dem dritten Port (103') des zweiten QBPA (100') ist,

$h_2^{SIC}$ eine Übertragungsfunktion aus dem vierten Port (104') des zweiten QBPA (100') zu dem dritten Port (103') des zweiten QBPA (100') ist,

$h_{2\to1}^{Tx}$ eine Übertragungsfunktion aus dem ersten Port (101') des zweiten QBPA (100') zu dem dritten Port (103') des ersten QBPA (100) ist,

$h_{2\to1}^{SIC}$ eine Übertragungsfunktion aus dem vierten Port (104') des zweiten QBPA (100') zu dem dritten Port (103) des ersten QBPA (100) ist,

$h_{1\to2}^{Tx}$ eine Übertragungsfunktion aus dem ersten Port (101) des ersten QBPA (100) zu dem dritten Port (103') des zweiten QBPA (100') ist, und

$h_{1\to2}^{SIC}$ eine Übertragungsfunktion aus dem vierten Port (104) des ersten QBPA (100) zu dem dritten Port (103') des zweiten QBPA (100') ist,

wobei das Bestimmen eines Unterdrückungseingangssignals (1041) für jeden jeweiligen QBPA (100) das Bestimmen der Unterdrückungseingangssignale $a_{SIC}$ und $b_{SIC}$ umfasst, die das Lecksignal an dem ersten QBPA (100) und das Lecksignal an dem zweiten QBPA (100') auf Null bringen.

12. Computerprogrammprodukt, umfassend einen Programmcode zum Durchführen des Verfahrens (400) nach Anspruch 11, wenn er auf einem Prozessor implementiert wird.

**Revendications**

1. Dispositif (200) de suppression des interférences de multiples amplificateurs de puissance équilibrés en quadrature, QBPA, (100, 100'), dans lequel chaque QBPA (100, 100') comprend un premier port (101, 101') pour la réception d'un signal d'entrée de transmission (1011, 1011'), un deuxième port (102, 102') pour la transmission d'un signal de transmission (1021, 1021') et la réception d'un signal de réception (1022, 1022'), un troisième port (103, 103') pour la fourniture d'un signal de sortie de réception (1031, 1031') et un quatrième port (104, 104') pour la réception d'un signal d'entrée de suppression (1041, 1041'),

dans lequel le dispositif (200) est configuré pour :

déterminer un signal d'entrée de suppression (1041) pour chaque QBPA (100) respectif, de manière à permettre au signal d'entrée de suppression (1041) de supprimer un signal de fuite au niveau du troisième port (103) du QBPA (100) respectif, dans lequel le signal de fuite est provoqué par le signal d'entrée de transmission (1011) du QBPA (100) respectif, un ou plusieurs signaux d'entrée de transmission (1011') d'un ou plusieurs autres QBPA (100') des multiples QBPA (100, 100'), et un ou plusieurs signaux d'entrée de suppression (1041') d'un ou plusieurs autres QBPA (100') des multiples QBPA (100, 100') ; et

fournir le signal d'entrée de suppression déterminé (1041) au quatrième port (104) du QBPA respectif (100) ; dans lequel les multiples QBPA (100, 100') comprennent un premier QBPA (100) et un deuxième QBPA (100'), dans lequel le dispositif (200) est également configuré pour déterminer le signal de fuite au niveau du troisième port (103) du QBPA (100) respectif sur la base de fonctions de transfert obtenues ou estimées par le dispositif (200), et déterminer le signal d'entrée de suppression (1041) pour chaque QBPA (100) respectif à l'aide du signal de fuite déterminé, dans lequel le signal de fuite au niveau du premier QBPA (100) comprend $h_1^{Tx}a_{TX}$, $h_1^{SIC}a_{SIC}$, $h_{2\to1}^{Tx}b_{TX}$, et $h_{2\to1}^{SIC}b_{SIC}$, et le signal de fuite au niveau du deuxième QBPA (100') comprend $h_2^{Tx}b_{TX}$, $h_2^{SIC}b_{SIC}$, $h_{1\to2}^{Tx}a_{TX}$, et $h_{1\to2}^{SIC}a_{SIC}$,

dans lequel :

$a_{SIC}$ est un signal d'entrée de suppression (1041) du premier QBPA (100),
$b_{SIC}$ est un signal d'entrée de suppression (1041') du deuxième QBPA (100'),
$a_{TX}$ est un signal d'entrée de transmission (1011) du premier QBPA (100),
$b_{TX}$ est un signal d'entrée de transmission (1011') du deuxième QBPA (100'),

$h_1^{Tx}$ est une fonction de transfert du premier port (101) du premier QBPA (100) au troisième port (103) du premier QBPA (100),

$h_1^{SIC}$ est une fonction de transfert du quatrième port (104) du premier QBPA (100) au troisième port (103) du premier QBPA (100),

$h_2^{Tx}$ est une fonction de transfert du premier port (101') du deuxième QBPA (100') au troisième port (103') du deuxième QBPA (100'),

$h_2^{SIC}$ est une fonction de transfert du quatrième port (104') du deuxième QBPA (100') au troisième port (103) du deuxième QBPA (100),

$h_{2\to1}^{Tx}$ est une fonction de transfert du premier port (101') du deuxième QBPA (100') au troisième port (103) du premier QBPA (100),

$h_{2\to1}^{SIC}$ est une fonction de transfert du quatrième port (104) du deuxième QBPA (100) au troisième port (103) du premier QBPA (100),

$h_{1\to2}^{Tx}$ est une fonction de transfert du premier port (101) du premier QBPA (100) au troisième port (103) du deuxième QBPA (100'), et

$h_{1\to2}^{SIC}$ est une fonction de transfert du quatrième port (104) du premier QBPA (100) au troisième port (103') du deuxième QBPA (100'),

dans lequel le dispositif (200) est configuré pour déterminer les signaux d'entrée de suppression $a_{SIC}$ et $b_{SIC}$ qui font que le signal de fuite au niveau du premier QBPA (100) et le signal de fuite au niveau du deuxième QBPA (100') sont nuls.

**2.** Dispositif (200) selon la revendication 1, dans lequel $a_{TX}$ et $b_{TX}$ sont connus du dispositif (200), et le dispositif (200) est également configuré pour :

obtenir des fonctions de transfert du premier QBPA (100) et du deuxième QBPA (100') ; et
déterminer les signaux d'entrée de suppression (1041, 1041') du premier QBPA (100) et du deuxième QBPA (100') à l'aide d'une matrice :

$$\begin{bmatrix} a_{SIC} \\ b_{SIC} \end{bmatrix} = - \begin{bmatrix} h_1^{SIC} & h_{2\rightarrow1}^{SIC} \\ h_{1\rightarrow2}^{SIC} & h_2^{SIC} \end{bmatrix}^{-1} \begin{bmatrix} h_1^{Tx} & h_{2\rightarrow1}^{Tx} \\ h_{1\rightarrow2}^{Tx} & h_2^{Tx} \end{bmatrix} \begin{bmatrix} a_{TX} \\ b_{TX} \end{bmatrix}.$$

**3.** Dispositif (200) selon la revendication 1, dans lequel $a_{TX}$ et $b_{TX}$ sont connus du dispositif (200), dans lequel le signal d'entrée de transmission (1011/1011') d'au moins l'un du premier QBPA (100) et du deuxième QBPA (100') comprend des composantes non linéaires, et le dispositif (200) est également configuré pour :

obtenir des fonctions de transfert du premier QBPA (100) et du deuxième QBPA (100') ; et
déterminer les signaux d'entrée de suppression (1041, 1041') du premier QBPA (100) et du deuxième QBPA (100') à l'aide d'une matrice :

$$\begin{bmatrix} a_{SIC} \\ b_{SIC} \end{bmatrix} = - \begin{bmatrix} h_1^{SIC} & h_{2\rightarrow1}^{SIC} \\ h_{1\rightarrow2}^{SIC} & h_2^{SIC} \end{bmatrix}^{-1} \left( \begin{bmatrix} h_1^{Tx} & h_{2\rightarrow1}^{Tx} \\ h_{1\rightarrow2}^{Tx} & h_2^{Tx} \end{bmatrix} \begin{bmatrix} a_{TX} \\ b_{TX} \end{bmatrix} + \Sigma \begin{bmatrix} h_{1n}^{Tx} & h_{2\rightarrow1n}^{Tx} \\ h_{1\rightarrow2n}^{Tx} & h_{2n}^{Tx} \end{bmatrix} \begin{bmatrix} |a_{TX}|^{n-1} a_{TX} \\ |b_{TX}|^{n-1} b_{TX} \end{bmatrix} \right),$$

dans lequel :

n correspond à un ordre de puissance de composante non linéaire,
n étant un entier positif,

$h_{1n}^{Tx}$ est une fonction de transfert pour la composante non linéaire du premier port (101) du premier QBPA (100) au troisième port (103) du premier QBPA (100),

$h_{2n}^{Tx}$ est une fonction de transfert pour la composante non linéaire du premier port (101') du deuxième QBPA (100') au troisième port (103') du deuxième QBPA (100'),

$h_{2\rightarrow1n}^{Tx}$ est une fonction de transfert pour la composante non linéaire du premier port (101') du deuxième QBPA (100') au troisième port (103) du premier QBPA (100), et

$h_{1\rightarrow2n}^{Tx}$ est une fonction de transfert pour la composante non linéaire du premier port (101) du premier QBPA (100) au troisième port (103') du deuxième QBPA (100').

**4.** Dispositif (200) selon la revendication 1, dans lequel le signal d'entrée de transmission (1011/1011') et/ou le signal d'entrée de suppression (1041/1041') d'au moins l'un du premier QBPA (100) et du deuxième QBPA (100') comprend des composantes non linéaires, et le dispositif (200) est également configuré pour :

déterminer les signaux d'entrée de suppression (1041, 1041') du premier QBPA (100) et du deuxième QBPA (100') à l'aide de :

$$\underset{\Sigma|a_{SIC}|^{n-1} a_{SIC}, \Sigma|b_{SIC}|^{n-1} b_{SIC}}{\mathrm{argmin}} \{f(a_{TX}, b_{TX}) + g(a_{SIC}, b_{SIC})\},$$

dans lequel $f$ et $g$ sont des fonctions non linéaires représentant des fonctions de transfert comportant des composantes non linéaires.

**5.** Dispositif (200) selon la revendication 1, dans lequel les multiples QBPA (100, 100') comprennent également un troisième QBPA, et le dispositif (200) est également configuré pour :

obtenir des fonctions de transfert du premier QBPA (100), du deuxième QBPA (100') et du troisième QBPA ; et
déterminer les signaux d'entrée de suppression du premier QBPA (100), du deuxième QBPA (100') et du troisième QBPA à l'aide d'une matrice :

$$\begin{bmatrix} a_{SIC} \\ b_{SIC} \\ c_{SIC} \end{bmatrix} = - \begin{bmatrix} h_1^{SIC} & h_{2\rightarrow1}^{SIC} & h_{3\rightarrow1}^{SIC} \\ h_{1\rightarrow2}^{SIC} & h_2^{SIC} & h_{3\rightarrow2}^{SIC} \\ h_{1\rightarrow3}^{SIC} & h_{2\rightarrow3}^{SIC} & h_3^{SIC} \end{bmatrix}^{-1} \begin{bmatrix} h_1^{Tx} & h_{2\rightarrow1}^{Tx} & h_{3\rightarrow1}^{Tx} \\ h_{1\rightarrow2}^{Tx} & h_2^{Tx} & h_{3\rightarrow2}^{Tx} \\ h_{1\rightarrow3}^{Tx} & h_{2\rightarrow3}^{Tx} & h_3^{Tx} \end{bmatrix} \begin{bmatrix} a_{TX} \\ b_{TX} \\ c_{TX} \end{bmatrix},$$

dans lequel :

$a_{TX}$, $b_{TX}$ sont connus du dispositif,

$c_{TX}$ est un signal d'entrée de transmission du troisième QBPA et connu du dispositif (200),

$h_3^{Tx}$ est une fonction de transfert du premier port du troisième QBPA au troisième port du troisième QBPA,

$c_{SIC}$ est le signal d'entrée de suppression du troisième QBPA,

$h_3^{SIC}$ est une fonction de transfert du quatrième port du troisième QBPA au troisième port du troisième QBPA,

$h_{3\to1}^{Tx}$ est une fonction de transfert du premier port du troisième QBPA au troisième port (103) du premier QBPA (100),

$h_{3\to1}^{SIC}$ est une fonction de transfert du quatrième port du troisième QBPA au troisième port (103) du premier QBPA (100),

$h_{1\to3}^{Tx}$ est une fonction de transfert du premier port (101) du premier QBPA (100) au troisième port du troisième QBPA,

$h_{1\to3}^{SIC}$ est une fonction de transfert du quatrième port (104) du premier QBPA (100) au troisième port du troisième QBPA,

$h_{3\to2}^{Tx}$ est une fonction de transfert du premier port du troisième QBPA au troisième port (103') du deuxième QBPA (100'),

$h_{3\to2}^{SIC}$ est une fonction de transfert du quatrième port du troisième QBPA au troisième port (103') du deuxième QBPA (100'),

$h_{2\to3}^{Tx}$ est une fonction de transfert du premier port (101') du deuxième QBPA (100') au troisième port du troisième QBPA, et

$h_{2\to3}^{SIC}$ est une fonction de transfert du quatrième port (104') du deuxième QBPA (100') au troisième port du troisième QBPA.

6. Dispositif (200) selon la revendication 1, dans lequel les multiples QBPA (100, 100') comprennent m QBPA, m étant un entier positif supérieur à 3, et le dispositif (200) est également configuré pour :

obtenir des fonctions de transfert des multiples QBPA (100, 100') ; et
déterminer les signaux d'entrée de suppression (1041, 1041') des multiples QBPA (100, 100') à l'aide d'une matrice :

$$
\begin{bmatrix} a_{SIC} \\ b_{SIC} \\ \vdots \\ z_{SIC} \end{bmatrix} = - \begin{bmatrix} h_1^{SIC} & h_{2\to1}^{SIC} & \cdots & h_{m\to1}^{SIC} \\ h_{1\to2}^{SIC} & h_2^{SIC} & \cdots & h_{m\to2}^{SIC} \\ \vdots & \vdots & \vdots & \vdots \\ h_{1\to m}^{SIC} & h_{2\to m}^{SIC} & \cdots & h_m^{SIC} \end{bmatrix}^{-1} \begin{bmatrix} h_1^{Tx} & h_{2\to1}^{Tx} & \cdots & h_{m\to1}^{Tx} \\ h_{1\to2}^{Tx} & h_2^{Tx} & \cdots & h_{m\to2}^{Tx} \\ \vdots & \vdots & \vdots & \vdots \\ h_{1\to m}^{Tx} & h_{2\to m}^{Tx} & \cdots & h_m^{Tx} \end{bmatrix} \begin{bmatrix} a_{TX} \\ b_{TX} \\ \vdots \\ z_{TX} \end{bmatrix},
$$

dans lequel :

$a_{TX}$, $b_{TX}$ sont connus du dispositif (200),

$z_{TX}$ est un signal d'entrée de transmission du m-ième QBPA et connu du dispositif (200),

$h_m^{Tx}$ est une fonction de transfert du premier port du m-ième QBPA au troisième port du m-ième QBPA,

$z_{SIC}$ est un signal d'entrée de suppression du m-ième QBPA,

$h_m^{SIC}$ est une fonction de transfert du quatrième port du m-ième QBPA au troisième port du m-ième QBPA,

$h_{m\to1}^{Tx}$ est une fonction de transfert du premier port du m-ième QBPA au troisième port (103) du premier QBPA (100),

$h_{m\to1}^{SIC}$ est une fonction de transfert du quatrième port du m-ième QBPA au troisième port (103) du premier QBPA (100),

$h_{1\to m}^{Tx}$ est une fonction de transfert du premier port (101) du premier QBPA (100) au troisième port du m-ième QBPA,

$h_{1\to m}^{SIC}$ est une fonction de transfert du quatrième port (104) du premier QBPA (100) au troisième port du m-ième QBPA,

$h_{\mathrm{m}\to2}^{Tx}$ est une fonction de transfert du premier port du m-ième QBPA au troisième port (103') du deuxième QBPA (100'),

$h_{\mathrm{m}\to2}^{SIC}$ est une fonction de transfert du quatrième port du m-ième QBPA au troisième port (103') du deuxième QBPA (100'),

$h_{2\to\mathrm{m}}^{Tx}$ est une fonction de transfert du premier port (101') du deuxième QBPA (100') au troisième port du m-ième QBPA, et

$h_{2\to\mathrm{m}}^{SIC}$ est une fonction de transfert du quatrième port (104') du deuxième QBPA (100') au troisième port du m-ième QBPA.

7. Dispositif (200) selon l'une des revendications 1 à 6, également configuré pour : estimer une fonction de transfert au niveau du troisième port (103) du QBPA (100) respectif, en transmettant une ou plusieurs séquences d'entraînement aux premiers ports (101, 101') et aux quatrièmes ports (104, 104') des multiples QBPA (100, 100').

8. Dispositif (200) selon la revendication 7, dans lequel les une ou plusieurs séquences d'entraînement sont des séquences d'entraînement orthogonales basées sur une matrice P, et le dispositif (200) est configuré pour : estimer la fonction de transfert en transmettant simultanément les une ou plusieurs séquences d'entraînement aux premiers ports (101, 101') et aux quatrièmes ports (104, 104') des multiples QBPA (100, 100').

9. Dispositif (200) selon la revendication 7, également configuré pour : estimer la fonction de transfert en transmettant séquentiellement les une ou plusieurs séquences d'entraînement aux premiers ports (101, 101') et aux quatrièmes ports (104, 104') des multiples QBPA (100, 100').

10. Dispositif (200) selon la revendication 7, également configuré pour :

entrelacer les une ou plusieurs séquences d'entraînement dans le domaine fréquentiel ; et estimer la fonction de transfert en transmettant simultanément les une ou plusieurs séquences d'entraînement entrelacées aux premiers ports (101, 101') et aux quatrièmes ports (104, 104') des multiples QBPA (100, 100').

11. Procédé (400) de suppression des interférences de multiples amplificateurs de puissance équilibrés en quadrature, QBPA, (100, 100'), dans lequel chaque QBPA (100, 100') comprend un premier port (101, 101') pour la réception d'un signal d'entrée de transmission (1011, 1011'), un deuxième port (102, 102') pour la transmission d'un signal de transmission (1021, 1021') et la réception d'un signal de réception (1022, 1022'), un troisième port (103, 103') pour la fourniture d'un signal de sortie de réception (1031, 1031') et un quatrième port (104, 104') pour la réception d'un signal d'entrée de suppression (1041, 1041'), dans lequel le procédé (400) comprend :

la détermination (401) d'un signal d'entrée de suppression (1041) pour chaque QBPA (100) respectif, dans lequel le signal d'entrée de suppression (1041) supprime un signal de fuite au niveau du troisième port (103) du QBPA (100) respectif, dans lequel le signal de fuite est provoqué par le signal d'entrée de transmission (1011) du QBPA (100) respectif, un ou plusieurs signaux d'entrée de transmission (1011) d'un ou plusieurs autres QBPA (100') dans les multiples QBPA (100, 100'), et un ou plusieurs signaux d'entrée de suppression (1041') d'un ou plusieurs autres QBPA (100') dans les multiples QBPA (100, 100') ; et la fourniture (402) du signal d'entrée de suppression (1041) déterminé au quatrième port (104) du QBPA (100) respectif, dans lequel le procédé (400) comprend également : la détermination du signal de fuite au niveau du troisième port (103) du QBPA (100) respectif sur la base des fonctions de transfert obtenues ou estimées par le dispositif (200), et la détermination du signal d'entrée de suppression (1041) pour chaque QBPA (100) respectif à l'aide du signal de fuite déterminé, dans lequel les multiples QBPA (100, 100') comprennent un premier QBPA (100) et un deuxième QBPA (100'), dans lequel le signal de fuite au niveau du premier QBPA (100) comprend

$h_1^{Tx}a_{TX}$, $h_1^{SIC}a_{SIC}$, $h_{2\to1}^{Tx}b_{TX}$, et $h_{2\to1}^{SIC}b_{SIC}$, et le signal de fuite au niveau du deuxième QBPA (100') comprend

$h_2^{Tx}b_{TX}$, $h_2^{SIC}b_{SIC}$, $h_{1\to2}^{Tx}a_{TX}$, et $h_{1\to2}^{SIC}a_{SIC}$,

dans lequel :

$a_{SIC}$ est un signal d'entrée de suppression (1041) du premier QBPA (100),
$b_{SIC}$ est un signal d'entrée de suppression (1041') du deuxième QBPA (100'),
$a_{TX}$ est un signal d'entrée de transmission (1011) du premier QBPA (100),
$b_{TX}$ est un signal d'entrée de transmission (1011') du deuxième QBPA (100'),

$h_1^{Tx}$ est une fonction de transfert du premier port (101) du premier QBPA (100) au troisième port (103) du premier QBPA (100),

$h_1^{SIC}$ est une fonction de transfert du quatrième port (104) du premier QBPA (100) au troisième port (103) du premier QBPA (100),

$h_2^{Tx}$ est une fonction de transfert du premier port (101') du deuxième QBPA (100') au troisième port (103') du deuxième QBPA (100'),

$h_2^{SIC}$ est une fonction de transfert du quatrième port (104') du deuxième QBPA (100') au troisième port (103) du deuxième QBPA (100),

$h_{2\to1}^{Tx}$ est une fonction de transfert du premier port (101') du deuxième QBPA (100') au troisième port (103) du premier QBPA (100),

$h_{2\to1}^{SIC}$ est une fonction de transfert du quatrième port (104) du deuxième QBPA (100) au troisième port (103) du premier QBPA (100),

$h_{1\to2}^{Tx}$ est une fonction de transfert du premier port (101) du premier QBPA (100) au troisième port (103) du deuxième QBPA (100'), et

$h_{1\to2}^{SIC}$ est une fonction de transfert du quatrième port (104) du premier QBPA (100) au troisième port (103') du deuxième QBPA (100'),

dans lequel la détermination d'un signal d'entrée de suppression (1041) pour chaque QBPA (100) respectif comprend la détermination des signaux d'entrée de suppression $a_{SIC}$ et $b_{SIC}$ qui font que le signal de fuite au niveau du premier QBPA (100) et le signal de fuite au niveau du deuxième QBPA (100') sont nuls.

12. Produit de programme informatique comprenant un code de programme pour exécuter, lorsqu'il est mis en œuvre sur un processeur, le procédé (400) selon la revendication 11.

FIG. 1

EP 4 133 605 B1

**FIG. 2**

**FIG. 3**

400

Determine a cancellation input signal for each respective QBPA, wherein the cancellation input signal cancels a leakage signal at the third port of the respective QBPA, wherein the leakage signal is caused by the transmit input signal of the respective QBPA, one or more transmit input signals of one or more other QBPAs in the multiple QBPAs, and one or more cancellation input signals of one or more other QBPAs in the multiple QBPAs

401

Provide the determined cancellation input signal to the fourth port of the respective QBPA

402

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020035140 A1

- US 9894612 B